# FASCICULE DE BREVET EUROPEEN

(11) **EP 1 678 809 B1**
(45) Date de publication et mention de la délivrance du brevet: **22.12.2010**
(21) Numéro de dépôt: 04805305.2
(22) Date de dépôt: 26.10.2004
(51) Int. Cl.: H02K 7/065

(54) **MACHINE ELECTROMAGNETIQUE A MEMBRANE DEFORMABLE**
ELEKTROMAGNETISCHE MASCHINE MIT DEFORMIERBARER MEMBRAN
ELECTROMAGNETIC MACHINE WITH A DEFORMABLE MEMBRANE

(30) Priorité: 29.10.2003 FR 0312671
(43) Date de publication de la demande: 12.07.2006
(73) Titulaire: Sam Amstar, 98000 Monaco (MC)
(72) Inventeur: DREVET, Jean-Baptiste, 75005 Paris (FR)
(74) Mandataire: Schuffenecker, Thierry
(86) Numéro de dépôt international: PCT/FR2004/002748
(87) Numéro de publication internationale: WO 2005/043717

(56) Documents cités:
- DE-A- 10 161 132
- US-A- 4 484 095
- US-A1- 2001 001 278

## Description

L'invention concerne une machine électromagnétique à membrane déformable.

### ARRIERE-PLAN DE L'INVENTION

On connaît des machines à membrane déformable animée par un moteur électromagnétique comprenant au moins une partie fixe adaptée à canaliser un flux électromagnétique agissant sur au moins une partie mobile pour provoquer un déplacement linéaire alternatif de ladite partie mobile en réponse à une variation alternative du flux magnétique.

Par exemple, la machine illustrée dans le document US 6 361 284 B2 comporte une membrane disposée entre deux flasques rigides pour onduler sous l'action d'un moteur électromagnétique dont la partie mobile est rigidement reliée à un bord de la membrane de sorte qu'un déplacement alternatif de la partie mobile provoque une ondulation de la membrane perpendiculairement à son plan.

On a constaté que de telles machines émettent du bruit, qui, s'il n'est pas d'une puissance sonore importante, peut néanmoins se révéler gênant dans des installations dans lesquelles la machine est en fonctionnement fréquent, voire permanent, comme par exemple des aquariums ou des réfrigérateurs.

Une partie de ce bruit est attribué au fait que la partie mobile du moteur provoque, lors de son déplacement alternatif, un déplacement pulsé d'air qui produit une onde sonore cohérente.

Par ailleurs, la partie mobile présente une inertie non négligeable par rapport à celle de la partie fixe. Le déplacement alternatif de la partie mobile provoque alors des vibrations de la partie fixe qui provoquent à leur tour des vibrations du support de la machine, source de bruit supplémentaire.

### OBJET DE L'INVENTION

L'invention a pour objet de proposer une machine électromagnétique à membrane déformable dont le fonctionnement est particulièrement silencieux.

### BREVE DESCRIPTION DE L'INVENTION

A cet effet, on propose selon l'invention une machine électromagnétique à membrane déformable comportant au moins une partie fixe apte à canaliser un flux magnétique interagissant avec au moins une partie mobile qui comporte des régions magnétiquement polarisées de façon qu'un déplacement alternatif de la partie mobile une variation alternative du flux magnétique dans la partie fixe se correspondent, la partie mobile étant cinématiquement reliée à un bord de la membrane de sorte qu'au déplacement alternatif de la partie mobile corresponde une déformation de la membrane, dans laquelle la partie fixe et la partie mobile sont agencées pour conférer à la partie mobile un déplacement de type rotatif.

Ainsi, lors du mouvement de rotation alternatif de la partie mobile, l'air environnant la partie mobile est mis en mouvement essentiellement par cisaillement alternatif, qui ne produit aucune onde sonore cohérente.

En outre, la machine ne subit plus de vibrations linéaires alternatives, hormis celles générées par les mouvements et déformations de la membrane qui sont de faible amplitude et donc induisent un bruit faible.

La machine de l'invention est ainsi sensiblement moins bruyante que les machines connues.

De préférence, la ou les parties mobiles sont de forme substantiellement cylindrique circulaire et sont astreintes à tourner substantiellement autour de leur axe géométrique.

Ainsi, la partie mobile ne provoque aucun déplacement d'air, si ce n'est par cisaillement à proximité immédiate des parois de la partie mobile. Ce type de patrie mobile rend le fonctionnement de la machine particulièrement silencieux.

Selon un mode particulier de réalisation, la ou les parties fixes comprennent chacune au moins une bobine traversée par un noyau formant un chemin magnétique pour le flux magnétique interrompu par un ou des espaces s'étendant entre des paires de parois actives du noyau, la ou les parties mobiles comprenant un corps délimité par deux faces parallèles entre lesquelles s'étendent les régions magnétiquement polarisées qui sont disposées de façon circonférentielle de sorte que deux régions adjacentes aient des polarisations opposées, la ou les parties mobiles étant chacune disposées dans un espace du noyau de sorte que les faces des parties actives de la partie mobile s'étendent en regard de parois actives du noyau.

Avantageusement, les parois actives du noyau s'étendent en regard d'une partie centrale de la partie mobile en regard et ont une aire inférieure à une aire des régions magnétiquement polarisées de ladite partie mobile.

Selon une disposition particulière, le bord de la membrane est engagée dans une échancrure périphérique de la partie mobile. En variante, un organe de liaison s'étend entre le bord de la membrane et la partie mobile.

Selon un mode particulier de réalisation, la membrane est circulaire ou tubulaire et la machine comprend une pluralité de parties mobiles agencées pour être diamétralement opposées deux à deux et pour tourner dans des sens opposés.

Selon un aspect avantageux de l'invention, les parties mobiles comportent un balourd disposé pour compenser des forces d'inertie alternatives de la membrane.

Avantageusement, la membrane s'étend entre deux flasques rigides ayant des formes adaptées pour conférer à la membrane un mouvement d'ondulation progressif lorsqu'elle est animée par la ou les parties mobiles.

### BREVE DESCRIPTION DES DESSINS

L'invention sera mieux comprise à la lumière de la description qui suit en référence aux figures annexées parmi lesquelles :
- la figure 1 est un schéma de principe d'une pompe à membrane circulaire selon un premier mode de réalisation de l'invention;
- la figure 2 est une vue en coupe selon la ligne II-II de la pompe de la figure 1 ;
- la figure 3 est une vue partielle de la figure 1, montrant l'un des rotors du moteur électromagnétique ;
- la figure 4 est une vue de face de la figure 3, montrant le rotor en position d'équilibre;
- la figure 5 est une vue analogue à la figure 4, montrant le rotor en cours de rotation dans un premier sens de rotation ;
- la figure 6 est une vue analogue à la figure 5, montrant le rotor en cours de rotation dans un second sens de rotation ;
- la figure 7 est une vue analogue à la figure 4 d'une variante de réalisation de l'invention ;
- la figure 8 est un schéma de principe d'une pompe à membrane circulaire selon un deuxième mode de réalisation de l'invention ;
- la figure 9 est une vue de dessous de la figure 8, montrant le moteur électromagnétique de la pompe de la figure 8 ;
- la figure 10 est une vue analogue à la figure 9 montrant une variante de réalisation du moteur de la pompe de la figure 8 ;
- la figure 11 est un schéma de principe d'un moteur électromagnétique selon un autre mode de réalisation de l'invention ;
- la figure 12 est une vue de face de la figure 11, montrant le rotor en position d'équilibre.
- la figure 13 est une vue analogue à la figure 12 montrant le rotor en cours de rotation dans un premier sens de rotation ;
- la figure 14 est une vue analogue à la figure 13 montrant le rotor en cours de rotation dans un second sens de rotation ;
- la figure 15 est une vue analogue à la figure 12 montrant une variante de réalisation du rotor ;
- la figure 16 est un schéma de principe d'une pompe à membrane tubulaire selon l'invention sur lequel les flasques de la pompe ont été omis ;
- la figure 17 est un schéma de principe d'une pompe à membrane rectangulaire selon l'invention.

### DESCRIPTION DETAILLEE DE L'INVENTION

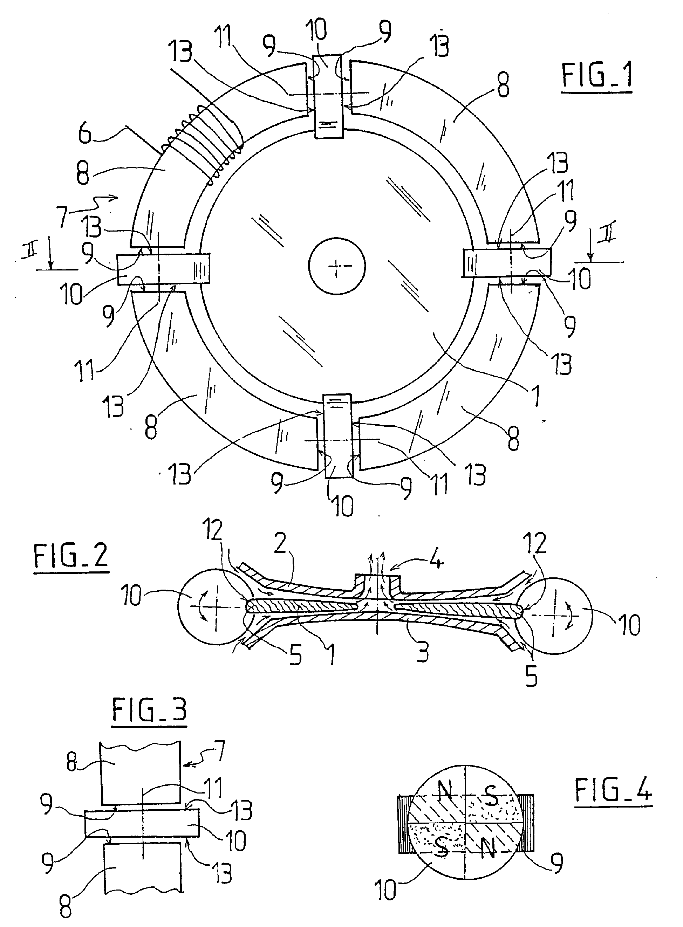

En référence aux figures 1 et 2, une pompe selon un premier mode de réalisation de l'invention comporte une membrane déformable 1 circulaire, ici réalisée en élastomère, astreinte à vibrer perpendiculairement à son plan entre deux flasques 2,3 rigides visibles en coupe à la figure 2. La vibration de la membrane 1 provoque de façon connue en soi l'aspiration de fluide par des entrées situées en périphérie de la membrane 1, le fluide étant forcé par la vibration de la membrane vers une ouverture centrale d'un des flasques, selon le circuit illustré par des flèches sur la figure 2.

Ici, la pompe est du type à membrane ondulante. Comme cela est connu en soi du document US 6 361 284 B2, les flasques sont conformés pour amortir une onde réfléchie de la membrane qui se propagerait de l'ouverture centrale vers la périphérie, de sorte que la membrane vibre selon une ondulation progressive qui permet de transférer l'énergie de vibration de la membrane au fluide sous forme d'énergie cinétique provoquant ainsi le mouvement dudit fluide vers l'ouverture centrale.

La membrane 1 est astreinte à vibrer perpendiculairement à son plan au moyen d'un moteur électromagnétique comprenant :
- une partie fixe ou stator qui comporte une bobine 6 et un noyau 7 en matériau ferromagnétique (de préférence formé par empilement de tôles). Le noyau 7 est composé de branches 8 dont l'une traverse la bobine 6, chaque branche ayant deux extrémités qui sont terminées par une face 9 qui s'étend parallèlement à une face similaire d'une extrémité d'une branche adjacente. Les faces 9 en regard forment ensemble l'une des paires de parois actives 9 du noyau 7 et délimitent entre elles un espace du noyau 7;
- des parties mobiles ou rotors 10 de forme cylindrique circulaire, comportant des régions magnétiquement polarisées s'étendant entre deux faces parallèles 13, et disposés dans les espaces qui s'étendent entre les paires des parois actives du noyau 7. On remarquera que lesdits espaces sont disposés angulairement de façon régulière de sorte que les rotors 10 sont deux à deux diamétralement opposés. Comme cela est visible à la figure 2, chacun des rotors 10 comporte une échancrure périphérique 12 dans laquelle est engagée une portion du bord 5 de la membrane 1.

L'alimentation de la bobine 6 en courant alternatif provoque la génération d'un champ magnétique alternatif qui circule dans les branches 8 du noyau 7 pour passer au travers des rotors 10. Cette circulation provoque, ainsi que cela sera expliqué plus loin en relation avec les figures 3 à 7,des mouvements synchronisés de rotation alternative des rotors 10 autour d'un axe imaginaire 11 coïncidant substantiellement avec leur axe géométrique.

Les rotors 10 diamétralement opposés tournent dans des sens opposés, de sorte que les portions du bord 5 de la membrane 1 engagées dans les échancrures 12 des rotors 10 sont simultanément levées et abaissées de façon synchronisée, au rythme de la rotation alternative des rotors 10. Le bord 5 de la membrane 1 est ainsi astreint à osciller perpendiculairement au plan de la membrane 1, ce qui provoque la vibration de celle-ci perpendiculairement à son plan.

La vibration de la membrane 1 est donc obtenue à l'aide de parties mobiles (les rotors 10) uniquement rotatives, de forme cylindrique circulaire, donc ne provoquant aucun déplacement pulsé d'air susceptible de donner naissance à une onde sonore cohérente.

Par ailleurs, la rotation en opposition des rotors 10 diamétralement opposés entraîne naturellement l'annulation deux à deux des forces inertielles engendrées par la rotation desdits rotors, ce qui supprime une source potentielle de vibration, et donc de bruit.

En outre, la présence de l'encoche 12 provoque un léger décalage du centre de masse des rotors 10 dans une direction diamétralement opposée à l'encoche. Les rotors 10 tournant sensiblement autour de leur axe géométrique, ce décalage crée un balourd qui forme une masse d'équilibrage des efforts d'inertie générés par les oscillations de la membrane 1. Cet équilibrage naturel contribue également à diminuer les vibrations (et donc le bruit) de la pompe.

Le principe de fonctionnement du moteur électromagnétique de la pompe est expliqué ci-dessous en relation avec les figures 3 à 7.

A la figure 3, on a représenté une portion du moteur électromagnétique comprenant un rotor 10 disposé dans l'espace s'étendant entre deux parois actives 9 du noyau 7. On constate que les faces parallèles 13 du rotor 10 s'étendent avec un entrefer faible en regard des parois actives 9 du noyau 7.

le rotor 10 est en matière métallique et a subi un traitement métallurgique lui conférant quatre secteurs aimantés (les directions d'aimantation s'étendent d'une face à l'autre des rotors 10) disposés de sorte que deux secteurs adjacents aient des polarisations opposées, référencées N et S pour nord et sud respectivement, visibles à la figure 4. Les quatre secteurs forment des régions magnétiquement polarisées qui partagent le rotor 10 en quatre parties d'aires égales, les secteurs étant centrés sur l'axe géométrique 11 du rotor 10.

Au repos, lorsque la bobine 6 n'est pas alimentée, le rotor 10 se place de lui-même dans une position représentée à la figure 4 dans laquelle les secteurs N et les secteurs S présentent la même aire en regard des parois actives 9. Pour mieux visualiser cette identité d'aires, l'aire présentée par les secteurs N en regard des parois actives 9 est soulignée par des hachures en traits mixtes, tandis que l'aire présentée par les secteurs S en regard des parois actives 9 est soulignée par des points.

Cette position est une position d'équilibre stable, et correspond à la fermeture maximale des flux induits par les secteurs aimantés du rotor 10 dans les branches 8 adjacentes du noyau 7. Lorsque l'on écarte angulairement le rotor 10 de cette position, une force de rappel électromagnétique agit sur le rotor 10 pour le ramener dans la position d'équilibre.

La force de rappel agit également à l'encontre d'un déplacement linéaire (notamment vertical) du rotor 10. Celui-ci est ainsi naturellement maintenu en lévitation dans sa position d'équilibre, ce qui évite le recours à un axe ou à un ressort de maintien, ce qui contribue à la simplicité du moteur, et au silence de son fonctionnement.

Cette stabilité est due d'une part à la forme non circulaire des parois actives 9 du noyau 7, et d'autre part aux dimensions desdites parois actives qui présentent une aire en regard des faces du rotor 10 inférieure à la somme des aires des régions magnétiquement polarisées. Cette stabilité est par ailleurs due au fait que les parois actives s'étendent en regard d'une région centrale des faces du rotor 10.

La circulation d'un flux magnétique généré par la bobine 6 dans le noyau 7 modifie cet équilibre et provoque la rotation du rotor 10 autour de son axe géométrique 11 dans un sens tendant à augmenter l'aire présentée en regard des parois actives 9 par ceux des secteurs N ou S dont la polarisation est orientée dans le même sens que le flux magnétique généré par la bobine 6.

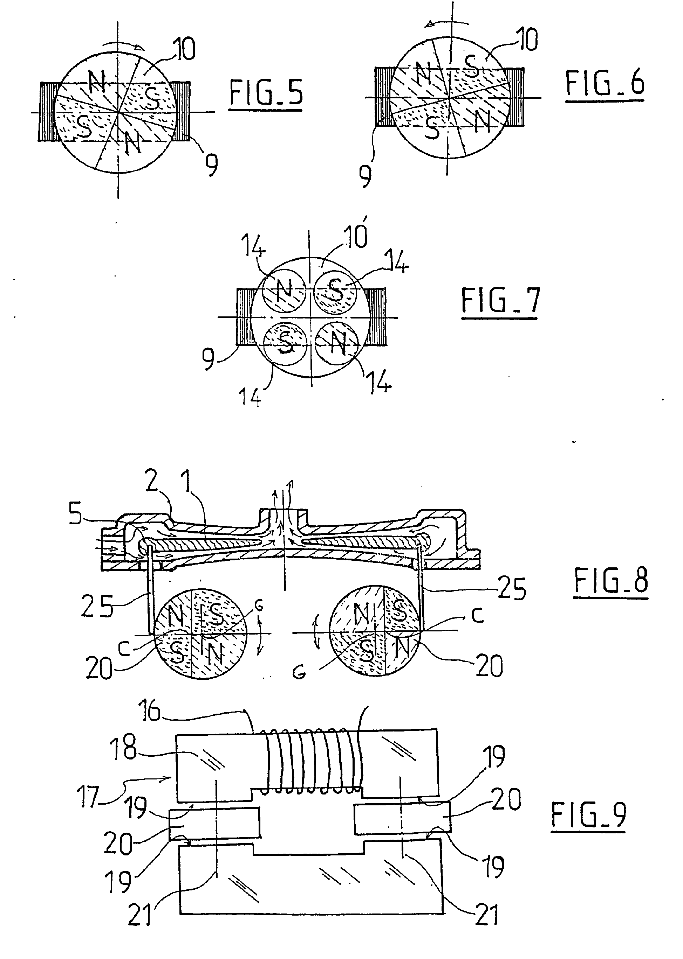

Les figures 5 et 6 illustrent les positions angulaires du rotor 10 au cours de sa rotation sous l'effet du champ magnétique généré par la bobine 6. A la figure 5, le rotor 10 est illustré tournant dans un premier sens pour lequel l'aire des secteurs S en regard des faces actives 9 tend à augmenter au détriment de l'aire des secteurs N. A la figure 6, le rotor 10 est illustré tournant dans un deuxième sens pour lequel l'aire des secteurs N en regard des faces actives 9 tend à augmenter au détriment de l'aire des secteurs S.

En pratique, le rotor 10 oscille avec une course angulaire dépendant d'un rapport entre l'intensité du champ magnétique généré par la bobine 6 et l'inertie des parties mobiles de la pompe.

A la figure 7 est illustrée une variante de réalisation 10' du rotor qui est ici fait d'un bloc cylindrique circulaire de résine dans lequel sont noyés des tronçons 14 d'un barreau aimanté, les tronçons 14 étant disposés circonférentiellement pour présenter des sens d'aimantation alternés. Chacun des tronçons 14 forme une région magnétiquement polarisée. Ce type de rotor a un comportement similaire à celui décrit en relation avec les figures 3 à 6. La position illustrée à la figure 7 est la position d'équilibre, dans laquelle les aires présentées par les tronçons N en regard des parois actives 9 du noyau sont égales aux aires présentées par les tronçons S en regard des parois active 9.

Selon un deuxième mode de réalisation de l'invention illustré aux figures 8 et 9, la membrane vibrante circulaire 1, toujours astreinte à vibrer entre des flasques 2,3, a son bord 5 relié à deux rotors 20 au moyen de lames métalliques 25 flexibles qui s'étendent du bord 5 de la membrane pour tangenter les rotors 20 sur leur périphérie. Les lames 25 sont fixées sur les rotors 20 par tout moyen approprié, comme un vissage ou un collage.

Les rotors 20 font partie d'un moteur électromagnétique comportant une bobine 16 et un noyau 17 comportant deux branches 18 (dont l'une traverse la bobine 16). Les branches 18 se terminent par des parois actives 19 entre lesquelles sont disposés les rotors 20. Le fonctionnement de ce moteur est en tous points similaire à celui décrit en relation avec les figures 3 à 7.

Le mouvement de rotation alternée des rotors 20 provoqué par l'alimentation de la bobine 16 en courant alternatif entraîne la génération d'efforts alternés et synchronisés de traction/compression dans les lames 25, qui font osciller le bord 5 de la membrane 1 dans une direction perpendiculaire à son plan, ce qui provoque une vibration de la membrane 1.

Les rotors 20 tournent dans des sens opposés de sorte que les effets inertiels de la rotation des rotors 20 s'annulent naturellement.

Afin de contrer les efforts d'inertie engendrés par les déplacements et le vibrations de la membrane, on peut prévoir de disposer un balourd sur les rotors 20. On peut également, selon un mode de réalisation particulier de l'invention, décaler l'axe de rotation du rotor par rapport à son centre de masse en prévoyant une répartition des régions magnétiquement polarisées autour d'un axe décalé par rapport au centre de masse. Comme cela est visible à la figure 8, les secteurs aimantés N, S ne sont pas exactement symétriques, mais s'étendent à partir d'un point C décalé du centre de masse G du rotor 20. Le décalage a été exagéré sur la figure pour être plus visible.

Le centre de gravité est ainsi décalé par rapport au centre de rotation du rotor 20, ce qui crée un balourd apte à contrer les efforts d'inertie de la membrane 1.

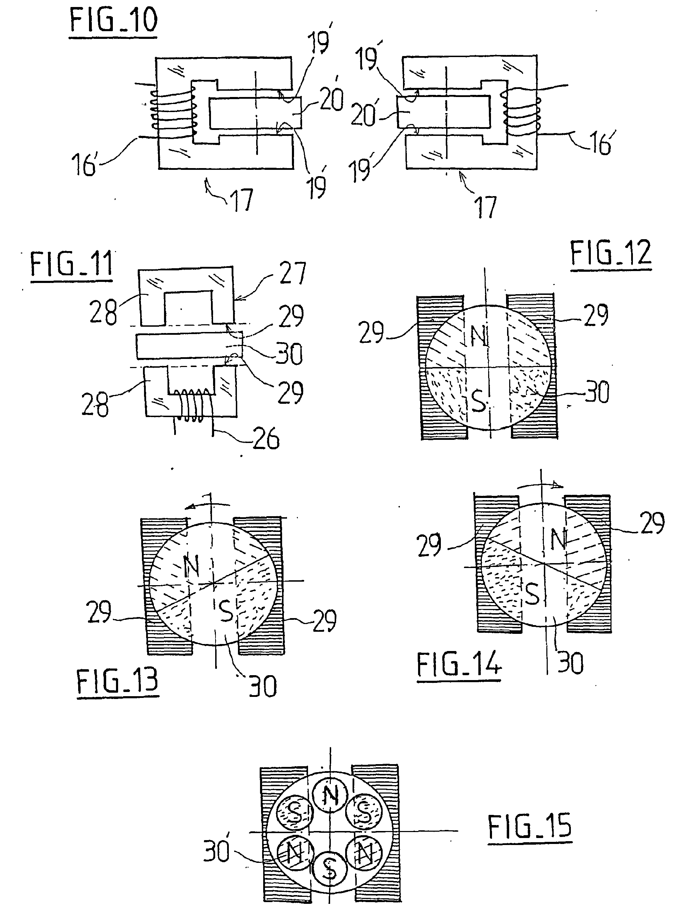

Selon une variante de réalisation, la pompe de la figure 8 comporte non plus un moteur à deux rotors, mais deux moteurs à un seul rotor, comme cela est illustré à la figure 10. Chacun des rotors 20' est associé à un noyau 17' et une bobine 16'. Les noyaux 17' sont formés d'une seule branche passant au travers de la bobine 16' correspondante et s'étendant en forme de fourche pour présenter en extrémité des parois actives 19' qui s'étendent en regard l'une de l'autre.

Les bobines 16' sont électriquement associées de façon à ce que les rotors 20' tournent en opposition l'un de l'autre de façon synchrone.

En variante, les moteurs monorotors précédents peuvent être remplacés par des moteurs monorotors tel que celui illustré à la figure 11, qui comprend un rotor 30 coopérant avec une partie fixe composée d'une bobine 26 et d'un noyau 27 composé de deux branches 28 (dont l'une traverse la bobine 26). Chaque branche 28 a une forme générale en U dont les extrémités définissent une paroi active 29 du noyau.

Comme cela est visible à la figure 12, le rotor 30 comporte deux secteurs aimantés (notés N,S) dans des sens opposés. Dans la position d'équilibre telle qu'illustrée à la figure 12, le secteur N présente une aire en regard des parois actives 29 du noyau 27 égale à l'aire que le secteur S présente en regard des parois actives du noyau.

Lorsque la bobine 26 est alimentée, les branches 28 du noyau 27 conduisent le flux magnétique généré par la bobine 26 pour conférer aux deux extrémités d'une même branche des polarités opposées. Le rotor 30 est alors astreint à tourner de façon à présenter en regard de chaque extrémité le secteur de polarisation correspondante. Les figures 13 et 14 illustrent des positions angulaires prises par le rotor 30 lors de rotations de celui-ci sous l'effet du champ magnétique généré par la bobine 26.

Dans une variante de réalisation illustrée à la figure 15, le rotor 30' comporte un bloc de résine de forme cylindrique circulaire dans lequel sont noyés six tronçons 31 de barreau aimanté disposés circonférentiellement de sorte que deux tronçons adjacents aient des polarisations opposées.

Le rotor trouve naturellement une position d'équilibre telle qu'illustrée à la figure 15 dans la quelle les aires des tronçons S en regard du noyau sont égal aux aires des tronçons N en regard du noyau.

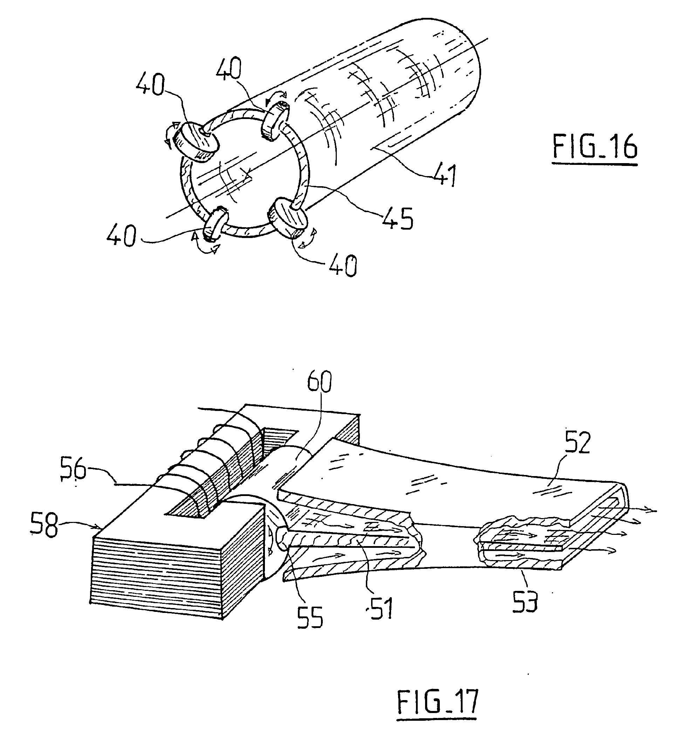

L'invention est applicable à des pompes à membrane non plane, telle que celle illustrée à la figure 16, qui comporte une membrane tubulaire 41. Les rotors 40 sont agencés à proximité d'un bord 45 de la membrane 41 pour recevoir ledit bord dans une échancrure 52. La membrane 41 est maintenue tendue grâce à des moyens de tension non représentés ici. La pompe comporte par ailleurs un flasque interne qui s'étend dans la membrane et un flasque externe qui s'étend autour de la membrane. Les flasques ne sont pas représentés ici.

Les rotors 40 sont ici agencés pour tourner en opposition deux à deux. La rotation alternée synchronisée des rotors 40 provoque une déformation alternée du bord 45 de la membrane 41. La tension imposée à la membrane 41 transforme celle-ci en un milieu propagatif qui permet la propagation d'une onde générée par les déformations alternées du bord 45 depuis ledit bord vers le bord libre de la membrane 41.

De même, l'invention peut être appliquée à une pompe à membrane rectangulaire, telle que celle illustrée à la figure 17.

L'un des bords 55 de la membrane 51 est reçue dans l'échancrure d'un rotor 60 qui coopère avec une partie fixe composée d'un noyau 58 passant au travers d'une bobine 56. La rotation alternée du rotor 60 provoque des oscillations du bord 55 de la membrane 51, qui provoque son ondulation entre les flasques 52,53, la membrane 51 étant maintenue tendue par des moyens de tension non représentés.

L'invention n'est pas limitée aux modes particuliers de réalisation qui viennent d'être décrits, mais bien au contraire englobe toute variante entrant dans le cadre de l'invention tel que défini par les revendications.

En particulier, bien que l'on ait illustré les rotors comme étant naturellement rappelés vers une position d'équilibre par fermeture du flux des régions magnétiquement polarisées dans le noyau, on pourra prévoir des rotors mécaniquement solidaires du noyau via un axe de rotation ou un ressort de centrage.

Bien que l'on ait illustré des parties mobiles comme étant des rotors parfaitement circulaires, les parties mobiles pourront prendre toute autre forme, en veillant cependant à minimiser tout mouvement pulsé d'air engendré par la rotation alternative de la partie mobile susceptible de donner naissance à une onde sonore.

Bien que l'on ait illustré des machines comportant des membranes associées à un moteur électromagnétique et fonctionnant en pompe, il est évident que l'invention couvre un fonctionnement inverse de ces machines lors duquel la membrane est mise en vibration par passage forcé d'un fluide, la vibration de la membrane entraînant des oscillations alternées du ou des rotors qui génèrent dans la ou les bobines un courant alternatif.

Bien que l'on ait indiqué que la ou les parties mobiles comprennent des régions magnétiquement polarisées constituées de secteurs aimantés ou de tronçons de barreau aimanté, chacune des régions magnétiquement polarisées pourra être remplacée de façon strictement équivalente par un bobinage de fil conducteur dont l'axe s'étend perpendiculairement aux faces de la partie mobile, le bobinage étant alimenté en courant continu via des contacts tournants ou encore des fils souples.

Il est évident que l'on pourra inverser le rôle de la partie fixe et de la partie mobile, par exemple en remplaçant le noyau par un aimant permanent et en prévoyant dans la partie mobile des bobinages alimentés en courant alternatif.

## Revendications

1. Machine électromagnétique à membrane déformable (1;41;51) comportant au moins une partie fixe (6,7; 16,17;16',17';26,27;56,57) apte à canaliser un flux magnétique interagissant avec au moins une partie mobile (10;20;20';30;60) qui comporte des régions magnétiquement polarisées (N,S) de façon qu'un déplacement alternatif de la partie mobile et une variation alternative du flux magnétique dans la partie fixe se correspondent, la partie mobile étant cinématiquement reliée à un bord (5;45;55) de la membrane de sorte qu'au déplacement alternatif de la partie mobile corresponde une déformation de la membrane, **caractérisée en ce que** la partie fixe et la partie mobile sont agencées pour conférer à la partie mobile un déplacement de type rotatif et **en ce que** la ou les parties fixes comprennent chacune au moins une bobine (6;16;16';56) traversée par un noyau (7;17;17;57) formant un chemin magnétique pour le flux magnétique interrompu par un ou des espaces s'étendant entre des paires de parois actives (9;19;19';29) du noyau, la ou les parties mobiles comprenant un corps délimité par deux faces parallèles (13) entre lesquelles s'étendent les régions magnétiquement polarisées (N,S) qui sont disposée de façon circonférentielle de sorte que deux régions adjacentes aient des polarisations opposées, la ou les parties mobiles (10;20;20';30;60) étant chacune disposées dans un espace du noyau (7;17;17';57) de sorte que les faces des parties actives de la partie mobile s'étendent en regard de parois actives du noyau.

2. Machine selon la revendication 1, **caractérisée en ce que** la ou les parties mobiles (10;20;20';30;60) sont de forme substantiellement cylindrique circulaire et sont astreintes à tourner sensiblement autour de leur axe géométrique.

3. Machine selon la revendication 1, **caractérisée en ce que** les parois actives (9;19;19';29) du noyau (7;17;17';57) s'étendent en regard d'une partie centrale de la partie mobile (10;20;20';30;60) en regard et ont une aire inférieure à une aire des régions magnétiquement polarisées de ladite partie mobile.

4. Machine selon la revendication 1, **caractérisée en ce que** le bord de la membrane (5;45;55) est engagé dans une échancrure périphérique (12) de la partie mobile.

5. Machine selon la revendication 1, **caractérisée en ce qu'**un organe de liaison (15) s'étend entre le bord de la membrane (1) et la partie mobile (20).

6. Machine selon la revendication 1 **caractérisée en ce que** la membrane (1;41) est circulaire ou tubulaire et **en ce que** la machine électromagnétique comprend une pluralité de parties mobiles (10;40) agencées pour être diamétralement opposées deux à deux et pour tourner dans des sens opposés.

7. Machine selon la revendication 1, **caractérisé en ce que** les parties mobiles (20) comportent un balourd disposé pour compenser des forces d'inertie alternatives de la membrane (1).

8. Machine selon la revendication 1, **caractérisé en ce que** la membrane (1) s'étend entre deux flasques rigides (2,3) ayant des formes adaptées pour conférer à la membrane (1) un mouvement d'ondulation progressif lorsqu'elle est animée par la ou les parties mobiles (10).

## Claims

1. Electromagnetic machine with a deformable membrane (1;41;51) comprising at least a fixed part (6,7;16,17;16',17';26,27;56,57) which can direct a magnetic flow interacting with at least one moveable part (10;20;20';30;60) which comprises magnetically polarized regions (N,S) such that they result to an alternative displacement of the moveable part and an alternative variation of the magnetic flow in the fixed part, the moveable part being kinetically connected to an edge (5; 45; 55) of the membrane so that a deformation of the membrane corresponds to an alternative displacement of the moveable part, **characterized in that** the fixed part and the moveable part are arranged in a manner that the moveable part can be displaced in a rotating manner and **in that** the fixed part or each of the fixed parts comprise at least a reel (6;16;16';56) traversed by a core (7;17;17';57) forming a magnetic path in which the magnetic flow is interrupted by one or more spaces extending between pairs of active walls (9;19;19';29) of the core, the moveable part or the moveable parts comprising a body limited by two parallel surfaces (13) between which extend the magnetically polarized regions (N, S) which are circumferentially disposed so that two adjacent regions have opposed polarizations, the moveable part or each of the moveable parts (10;20;20';30;60) being disposed in a space of the core (7;17;17';57) so that the surfaces of the active parts of the moveable part extend in regard with the active walls of the core.

2. Machine according to claim 1, **characterized in that** the moveable part or the moveable parts (10;20;20';30;60) have substantially cylindrical circular form and are constrained to perceptibly turn around their geometrical axis.

3. Machine according to claim 1, **characterized in that** the active walls (9;19;19';29) of the core (7;17;17';57) extend in regard with one central part of the relevant mobile part (10;20;20';30;60) and have an inferior region in a region of magnetically polarized regions of said moveable part.

4. Machine according to Claim 1, **characterized in that** the edge of the membrane (5;45;55) is engaged in a peripheral opening (12) of the movable part.

5. Machine according to Claim 1, **characterized in that** a combining element (15) extends between the edge of the membrane (1) and the moveable part (20).

6. Machine according to Claim 1, **characterized in that** the membrane (1;41) is circular or tubular and **in that** the electromagnetic machine comprises a plurality of moveable parts (10;40) arranged to be diametrically opposite, two by two, and turn in opposite directions.

7. Machine according to Claim 1, **characterized in that** the moveable parts (20) comprise an unbalance disposed in order to compensate for alternative inertia forces of the membrane (1).

8. Machine according to Claim 1, **characterized in that** the membrane (1) extends between two rigid flanges (2,3) having forms adapted to confer a progressive ondulation movement on the membrane (1) when it is animated by the moveable parts (10).

## Patentansprüche

1. Elektromagnetische Maschine mit einer verformbaren Membran (1; 41; 51), mindestens ein festes Teil (6, 7; 16, 17; 16', 17'; 26, 27; 56, 57) umfassend, das in der Lage ist, einen magnetischen Fluss zu kanalisieren, der mit mindestens einem beweglichen Teil (10; 20; 20'; 30; 60) zusammenwirkt, welches magnetisch polarisierte Regionen (N, S) umfasst, so dass eine alternative Bewegung des beweglichen Teils und eine alternative Veränderung des magnetischen Flusses in dem festen Teil einander entsprechen, wobei das bewegliche Teil kinematisch mit einem Rand (5; 45; 55) der Membran verbunden ist, so dass der alternativen Bewegung des beweglichen Teils eine Verformung der Membrane entspricht, **gekennzeichnet dadurch, dass** das feste Teil und das bewegliche Teil so angeordnet werden, um dem beweglichen Teil eine rotierende Bewegung zu gestatten sowie **dadurch**, dass das oder die festen Teil(e) jeweils mindestens eine von einem Kern (7; 17; 17'; 57) durchquerte Spule (6; 16; 16'; 56) umfassen, indem sie einen magnetischen Pfad bilden für den durch einen oder mehreren, sich zwischen den aktiven Wändepaaren (9; 19; 19'; 29) des Kernes erstreckenden Räumen, unterbrochenen magnetischen Fluss, wobei das oder die beweglichen Teil(e) einen Körper umfassen, der durch zwei parallele Seiten (13) begrenzt ist, zwischen denen sich die magnetisch polarisierten Regionen (N, S) erstrecken, die umlaufend angeordnet sind, so dass zwei angrenzende Regionen gegenüberliegende Polarisationen haben, wobei das oder die beweglichen Teil(e) (10; 20; 20; 30; 60) jeweils in einem Raum des Kernes (7; 17; 17'; 57) angeordnet sind, so dass die Seiten der aktiven Teile des beweglichen Teils sich zu den aktiven Wände des Kernes hin erstrecken.

2. Maschine nach Anspruch 1, **gekennzeichnet dadurch, dass** das oder die beweglichen Teile (10; 20; 20'; 30; 60) im Wesentlichen eine zylindrische imide Form aufweisen und gedrängt werden, sich im Wesentlichen um ihre geometrische Achse zu drehen.

3. Maschine nach Anspruch 1, **gekennzeichnet dadurch, dass** die aktiven Wände (9; 19; 19'; 29) des Kernes (7; 17; 17'; 57) sich zu einem dem beweglichen Teil (10; 20; 20'; 30; 60) gegenüberliegenden Mittelteil hin erstrecken und einen niedrigeren Bereich als einen Bereich der magnetisch polarisierten Regionen des besagtem beweglichen Teil haben.

4. Maschine nach Anspruch 1, **gekennzeichnet dadurch, dass** der Rand der Membran (5; 45; 55) in eine periphere Ausnehmung (12) des beweglichen Teils eingreift.

5. Maschine nach Anspruch 1, **gekennzeichnet dadurch, dass** sich ein Verbindungsorgan (15) zwischen dem Rand der Membran (1) und dem beweglichen Teil (20) erstreckt.

6. Maschine nach Anspruch 1, **gekennzeichnet dadurch, dass** die Membran (1; 41) rund oder rohrförmig ist, sowie **dadurch**, dass die elektromagnetische Maschine eine Vielzahl von beweglichen Teilen (10; 40) umfasst, die so aufeinander abgestimmt sind, dass sie paarweise diametral gegenüberliegen und sich in Gegenrichtungen drehen.

7. Maschine nach Anspruch 1, **gekennzeichnet dadurch, dass** die beweglichen Teile (20) eine Unwucht enthalten, die so angeordnet ist, um die alternativen Trägheitskräfte der Membran (1) zu kompensieren.

8. Maschine nach Anspruch 1, **gekennzeichnet dadurch, dass** sich die Membran (1) zwischen zwei starren Flanschen (2, 3) ersteckt, welche daran angepasste Formen haben, um der Membran (1) eine fortschreitende Wellenbewegung zu gestatten, wenn diese durch das oder die beweglichen Teil(e) (10) angeregt ist.
